(19) Europäisches Patentamt
European Patent Office
Office européen des brevets

(11) **EP 3 147 166 B1**

(12) **EUROPEAN PATENT SPECIFICATION**

(45) Date of publication and mention
of the grant of the patent:
**05.05.2021 Bulletin 2021/18**

(21) Application number: **15795457.9**

(22) Date of filing: **13.05.2015**

(51) Int Cl.:
**B60T 8/1755** (2006.01)

(86) International application number:
**PCT/JP2015/063781**

(87) International publication number:
**WO 2015/178276 (26.11.2015 Gazette 2015/47)**

(54) **VEHICLE CONTROL DEVICE**

FAHRZEUGSTEUERUNGSVORRICHTUNG

DISPOSITIF DE COMMANDE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2014 JP 2014104012**

(43) Date of publication of application:
**29.03.2017 Bulletin 2017/13**

(73) Proprietor: **Hitachi Astemo, Ltd.
Hitachinaka-shi, Ibaraki 312-8503 (JP)**

(72) Inventors:
• **SUZUKI, Keisuke
Atsugi-shi
Kanagawa 243-8510 (JP)**

• **HIGUMA, Motohiro
Atsugi-shi
Kanagawa 243-8510 (JP)**

(74) Representative: **Grünecker Patent- und
Rechtsanwälte
PartG mbB
Leopoldstraße 4
80802 München (DE)**

(56) References cited:
**EP-A1- 2 394 876       JP-A- H0 885 438
JP-A- H1 035 465       JP-A- 2000 272 489
JP-B2- 3 170 931       US-A- 5 329 805
US-A- 6 015 192**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to an apparatus for controlling a vehicle.

BACKGROUND ART

Conventionally, there has been known a technique discussed in PTL 1 as an apparatus for controlling a vehicle. In this patent literature, if a vehicle is determined to be in a turning state, a control apparatus corrects a target slip ratio according to how much the vehicle is turning, and also corrects wheel speed information for use in an estimation of a vehicle body speed, thereby preventing an estimated value of the vehicle body speed from having an error on a high-speed side due to highness of a detected speed of a turning outer wheel.
The preamble of claim 1 is known from PTL 2.

CITATION LIST

PATENT LITERATURE

[PTL 1]Japanese Patent Application Public Disclosure No. H08-85438
[PTL 2]US 6 015 192 A

SUMMARY OF INVENTION

TECHNICAL PROBLEM

However, since the correction is made only to the target slip ratio and the estimated value of the vehicle body speed, a start of control due to a slip state of a wheel is determined earlier when the vehicle is in the turning state than when the vehicle is running straight. As a result, a reduction or a stop of a driving torque or a braking torque is carried out earlier, leading to a risk of a loss of drivability. The present invention has been made in consideration of the above-described problem, and an object thereof is to provide a vehicle control apparatus capable of ensuring the drivability when the vehicle is turning.

SOLUTION TO PROBLEM

To achieve the above-described object, a vehicle control apparatus is provided according to claim 1 of the present invention.

BRIEF DESCRIPTION OF DRAWINGS

Fig. 1 is a system diagram illustrating a configuration of an electric vehicle according to a first embodiment.
Fig. 2 is a control block diagram illustrating a content of information transmitted and received by each controller according to the first embodiment.
Fig. 3 is a control block diagram illustrating a configuration of TCS control for outputting a TCS torque instruction value that is provided in a brake controller according to the first embodiment.
Fig. 4 illustrates a vehicle model for use in a correction of a wheel speed according to the first embodiment.
Fig. 5A illustrates a model that corrects the wheel speed when the vehicle is turning according to the first embodiment.
Fig. 5B illustrates a model that corrects the wheel speed when the vehicle is turning according to the first embodiment.
Fig. 6 illustrates a vehicle model for use in a correction of the wheel speed by another method as the correction of the wheel speed according to the first embodiment.
Fig. 7A is a characteristic diagram illustrating a frictional coefficient characteristic with respect to a slip ratio set for each road surface frictional coefficient (a road surface $\mu$).
Fig. 7B is a control block diagram illustrating processing for calculating a target slip ratio according to the first embodiment.

Fig. 8 is a characteristic diagram illustrating a difference between when the vehicle is turning and when the vehicle is running straight in terms of the target slip ratio set by the processing for setting the target slip ratio according to the first embodiment

Fig. 9 is a flowchart illustrating processing for determining a TCS control ongoing flag according to the first embodiment.

Fig. 10A is a timing chart when a driver performs a steering operation while the TCS control is in operation according to the first embodiment.

Fig. 10B is a timing chart when the driver performs the steering operation while the TCS control is in operation according to a comparative example.

Fig. 11A is a timing chart illustrating an effect of processing for correcting the wheel speed according to the first embodiment, and illustrates a change in a steering angle over time.

Fig. 11B is a timing chart illustrating the effect of processing for correcting the wheel speed according to the first embodiment, and illustrates a change in a yaw rate.

Fig. 11C is a timing chart illustrating the effect of processing for correcting the wheel speed according to the first embodiment, and illustrates each wheel speed when the vehicle speed is not corrected.

Fig. 11D is a timing chart illustrating the effect of processing for correcting the wheel speed according to the first embodiment, and illustrates a corrected wheel speed.

Fig. 12A is a timing chart when a slip occurs at a drive wheel with the vehicle running while turning, and the TCS control is activated, and illustrates a timing chart when the TCS control is performed without the wheel speed corrected.

Fig. 12B is a timing chart when a slip occurs at the drive wheel with the vehicle running while turning, and the TCS control is activated, and illustrates a timing chart when the TCS control is performed with use of the corrected wheel speed according to the first embodiment.

DESCRIPTION OF EMBODIMENTS

[First Embodiment]

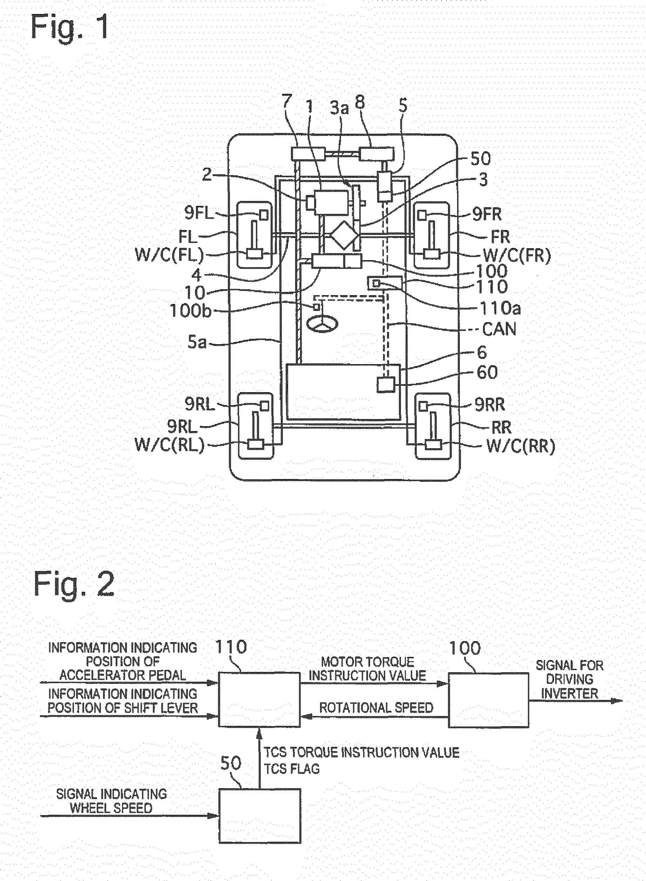

Fig. 1 is a system diagram illustrating a configuration of an electric vehicle according to a first embodiment. The electric vehicle is a front-wheel drive vehicle, and includes front wheels FR and FL, which are drive wheels, and rear wheels RR and RL, which are trailer wheels. Each of the wheels is provided with a wheel cylinder W/C(FR), W/C(FL), W/C(RR), or W/C(RL) (also referred to as simply W/C), which generates a friction braking force by pressing brake pads against a brake rotor rotating integrally with a tire, and a wheel speed sensor 9(FR), 9(FL), 9(RR), or 9(RL) (also referred to as simply 9), which detects a wheel speed of each of the wheels. A hydraulic unit 5 is connected to the wheel cylinder W/C via a hydraulic pipe 5a, thereby forming a hydraulic brake. Further, the electric vehicle includes a steering angle sensor 110b (corresponding to a steering operation amount calculation unit), which calculates a steering angle indicating a steering amount by which a driver steers the vehicle.

The hydraulic unit 5 includes a plurality of electromagnetic valves, a reservoir, a pump motor, and a brake controller 50, and controls a wheel cylinder hydraulic pressure at each of the wheels by controlling driving states of various kinds of electromagnetic valves and the pump motor based on instructions from the brake controller 50. The hydraulic unit 5 may be a known brake-by-wire unit, or may be a brake unit including a hydraulic circuit capable of realizing vehicle stability control. The type of the hydraulic unit 5 is not especially limited. Further, a vehicle controller 110 (which will be described below) includes a yaw rate sensor 110a, which detects a yaw rate of the vehicle.

An electric motor 1, which serves as a driving source, is provided with a resolver 2, which detects a rotational angle of the motor, and detects the rotational angle of the motor and also detects a rotational speed of the motor, based on a signal of the resolver. A differential gear 3 is connected to the electric motor 1 via a speed reduction mechanism 3a, and the front wheels FR and FL are connected to a drive shaft 4 connected to the differential gear 3. A high-voltage battery 6 and a battery controller 60 are mounted on a rear side of the vehicle. The high-voltage battery 6 supplies driving power to the electric motor 1 or collects regenerated power. The battery controller 60 monitors and controls a battery state of the high-voltage battery 6. An inverter 10, which is disposed between the high-voltage battery 6 and the electric motor 1, is controlled by a motor controller 100. Further, an auxiliary device battery 8 is connected to the high-voltage battery 6 via a DC-DC converter 7, and functions as a power source for driving the hydraulic unit 5. The electric vehicle according to the first embodiment is provided with a CAN communication line that is an in-vehicle communication line to which a plurality of controllers mounted on the vehicle is connected, whereby the steering angle sensor 110b, the brake controller 50, the vehicle controller 110, the battery controller 60, and the like are connected to one another so as to be able to communicate information.

Fig. 2 is a control block diagram illustrating a content of information transmitted and received by each of the controllers according to the first embodiment. The vehicle controller 110 receives inputs of information indicating a position of an accelerator pedal and information indicating a position of a shift lever, calculates a motor torque instruction value based on a basic driver request torque and results of a regenerative torque instruction value and a TCS torque instruction value output from the brake controller 50, and outputs the motor torque instruction value to the motor controller 100. The vehicle controller 110 outputs the driver request torque to the motor controller 100 when the regenerative torque instruction value and the TCS torque instruction value are not output from the brake controller 50, and outputs the regenerative torque instruction value and the TCS torque instruction value to the motor controller 100 when the regenerative torque instruction value and the TCS torque instruction value are output from the brake controller 50.

The brake controller 50 receives inputs of information indicating a driver's intention to brake the vehicle, such as an ON/OFF state of a brake switch, a stroke amount of the brake pedal, or a pressing force applied to the brake pedal, which indicate an operation state of a brake pedal. The brake controller 50 further receives inputs of the steering angle, the yaw rate, and a signal indicating the wheel speed of each of the wheels. Then, the brake controller 50 calculates a signal indicating a vehicle body speed, a brake hydraulic pressure to be supplied to the wheel cylinder W/C, and the instruction value for a regenerative torque to be generated by the electric motor 1. Further, the brake controller 50 calculates the TCS torque instruction value based on TCS control, which controls a driving slip state of each of the wheels to an appropriate slip state, and outputs the TCS torque instruction value to the vehicle controller 110. The motor controller 100 controls an activation state of the electric motor 1 based on the motor torque instruction value, and outputs information indicating an actual torque generated by the electric motor 1 to the vehicle controller 110, based on the detected actual motor torque, the rotational speed of the motor, a current value, and the like.

(Details of Control in Controller)

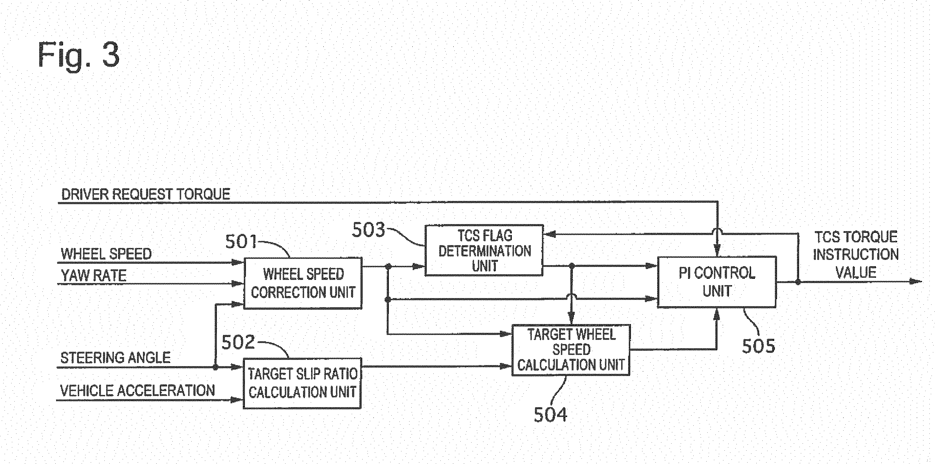

Fig. 3 is a control block diagram illustrating a configuration of the TCS control for outputting the TCS torque instruction value that is provided in the brake controller according to the first embodiment. A wheel speed correction unit 501 corrects the wheel speed based on the wheel speed, the yaw rate, and the steering angle.

(Processing for Correcting Wheel Speed)

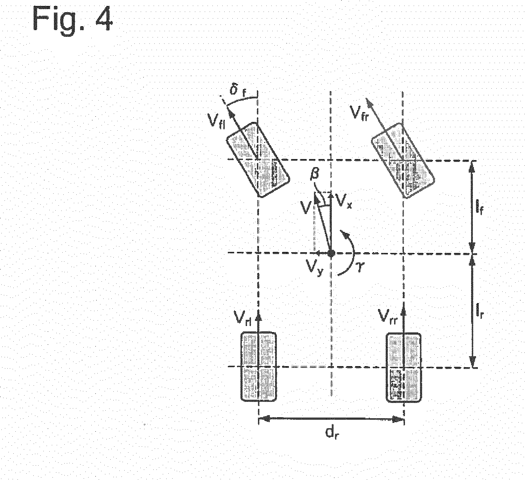

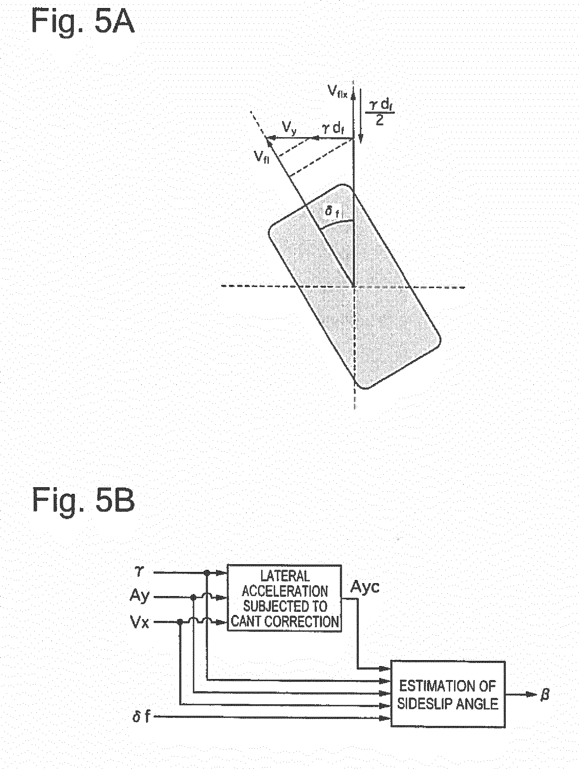

Fig. 4 illustrates a vehicle mode for use in the correction of the wheel speed according to the first embodiment. Figs. 5 each illustrate a model that corrects the wheel speed when the vehicle is turning according to the first embodiment. In these models, each symbol is defined as illustrated in Fig. 4.
V: Vehicle Body Speed, Vx: Longitudinal Component of Vehicle Body Speed, Vy: Lateral Component of Vehicle Body Speed, Vfl: Detected Value of Wheel Speed of Front Left Wheel, Vfr: Detected Value of Wheel Speed of Front Right Wheel, Vrl: Detected Value of Wheel Speed of Rear Left Wheel, Vrr: Detected Value of Wheel Speed of Rear Right Wheel, dr: track width, lf: Wheelbase between Center of Gravity and Front Axle, lr: Wheelbase between Center of Gravity and Rear Axle, δr: Steering Angle, β: Vehicle Sideslip Angle, γ: Yaw Rate

The longitudinal component of the wheel speed can be calculated with use of the following expression as indicated by the model of the front left wheel illustrated in Fig. 5A.

$$Vflx = [\{Vfl - (Vy + \gamma lf) \sin\delta f\} / \cos\delta f] + (\gamma dr / 2)$$

In this expression, each piece of information can be acquired by a method that will be described below.

Vfl: Value of Wheel Speed Sensor
Vx: Previously Estimated Vehicle Body Speed (for example, an average wheel speed of the trailer wheels when being estimated for the first time)
Vy: $Vx \cdot \tan\beta \approx Vx \cdot \beta$ (β is an estimated value calculable from the steering angle and the signal of the yaw rate sensor)
γ: Value of Yaw Rate Sensor
lf: Wheelbase Between Center Of Gravity And Front Axle (predetermined from vehicle specifications)
δf: Tire Angle (an estimated value calculable from the steering angle and a steering gear ratio)
dr: Track width (predetermined from the vehicle specifications)

The vehicle sideslip angle β is calculated from the yaw rate γ, a lateral acceleration Ay, the longitudinal component Vx of the vehicle body speed, and the tire angle δf as illustrated in Fig. 5B. The lateral acceleration Ay is a value affected while the vehicle is running on a cant road surface, whereby the vehicle sideslip angle β is calculated with use of a corrected lateral acceleration Ayc, which is acquired by removing the influence of the cant road surface based on the yaw rate γ and the longitudinal component Vx of the vehicle body speed.

By this correction, the wheel speed of each of the wheels is corrected as the wheel speed at a point of the center of gravity with use of the vehicle specifications indicating a position of each of the wheels, thereby outputting a corrected wheel speed. The wheel body speed is calculated based on this corrected wheel speed. For example, in the TCS control, an average of the corrected wheel speeds of the trailer wheels may be used as the vehicle body speed. This correction can correct, as a wheel speed at the point of the center of gravity of the vehicle, all of the influences due to the vehicle specifications, such as a difference in the wheel speed that might be generated between turning inner and outer wheels when the vehicle is turning, and a difference in the wheel speed that might be generated between a wheel that is steered and a wheel that is not steered, thereby acquiring the wheel speed from which the influences due to the vehicle specifications and the turn are removed. In other words, the corrected wheel speed does not vary relative to the vehicle body speed even when the vehicle is turning unless no slip occurs. Therefore, an incorrect determination, misinterpreting a change in the wheel speed that occurs along with the turn or the like as the occurrence of the slip is not made, which prevents, for example, the TCS control from intervening at an early timing.

Further, the vehicle body speed does not necessarily have to be calculated. For example, the brake controller may calculate, as a reference corrected wheel speed, such a value that each of the wheels exhibits the same value or matches within a predetermined range regardless of whether this is the value when the vehicle is running straight or when the vehicle is running while turning, provided that each of the wheels is in a non-slip state, and perform slip control based on how the corrected wheel speed of each of the wheels deviates from this reference corrected wheel speed. In other words, even without use of the actual vehicle body speed relative to the road surface as the vehicle body speed, the slip control can be realized by correcting the wheel speed into such a value that the values converge for each of the wheels, and detecting the slip from the deviation from this convergence value.

(Another Method 1)

In the method illustrated in Figs. 5, Vy is calculated from the vehicle sideslip angle β. On the other hand, another method 1 can correct the wheel speed, without use of β, from a relationship between the tire angle δf and the vehicle sideslip angle β because a relationship expressed by the following expression can be established between the tire angle δf and the vehicle sideslip angle β, assuming that a center of the turn is located on an extension of a rear axle.

$$\delta f = \{\gamma \, (lf + lr) \, / \, V\} \, \beta = \{lr \, / \, (lf + lr)\} \cdot \delta f = \{lr \, / \, (lf + lr)\} \cdot \{\gamma \, (lf + lr) \, / \, V\}$$

$$= \gamma \cdot lr \, / \, V \quad Vy = V\sin\beta \approx V \cdot \beta = V \, (\gamma lr \, / \, V) = \gamma \cdot lr$$

$$Vflx = \{Vfl - (\gamma \cdot lr + \gamma \cdot lf) \sin \delta f\} \, / \cos \delta f + \gamma \cdot dr \, / \, 2$$

When β is estimated, like the method illustrated in Figs. 5, the vehicle model should be acquired by a system identification method. However, the estimation accuracy reduces due to the influence of the road surface due to the cant road surface or the like, whereby the method illustrated in Figs. 5 requires the additional correction for eliminating the influence of the cant road surface. On the other hand, according to the method 1, β, which is the estimated value, is not used. Therefore, provided that the center of the turn is located on the extension of the rear axle, i.e., a large lateral acceleration does not occur, the method 1 does not require the correction of the influence on the cant road surface, which is required in the correction processing illustrated in Figs. 5, thereby achieving the correction without being affected by an error in an estimation of a cant angle on the cant road surface.

(Another Method 2)

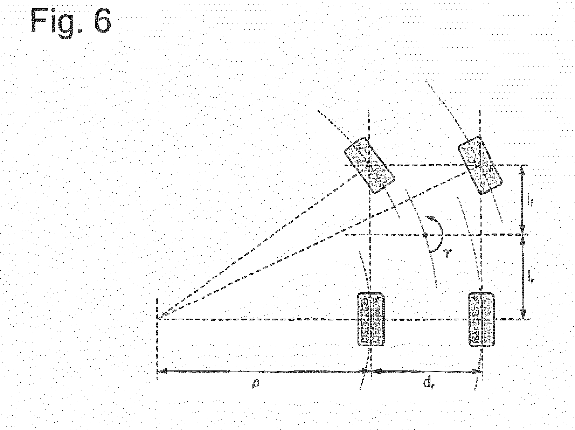

Fig. 6 illustrates a vehicle model for use in a correction of the wheel speed according to another method 2 as the correction of the wheel speed according to the first embodiment. In the method illustrated in Figs. 5, the wheel speed of each of the wheels is corrected as the wheel speed at the position of the center of gravity. On the other hand, in the other method 2, the wheel speed of each of the wheels is corrected based on the vehicle specifications indicating the position of each of the wheels, assuming that the center of the turn is located on the extension of the rear axle. At this time, because the yaw rate is the same at each of the wheels, the following expression is established, assuming that p represents a turning radius.

$$\gamma = Vrl \, / \, \rho = Vrr \, / \, (\rho + dr) = Vfl \, / \, (\rho^2 + (lf + lr)^2)^{1/2}$$

$$= Vfr \, / \, \{(\rho + dr)^2 + (lf + lr)^2\}^{1/2}$$

From this expression, the turning radius $\rho$ of a turning inner rear wheel is expressed by the following expression.

$$\rho = dr \cdot Vrl \, / \, (Vrr - Vrl)$$

When this condition is satisfied, the corrected wheel speeds V'fl, V'fr, V'rl, V'rr estimated from the respective wheel speeds are expressed by the following expressions, respectively.

$$V'fl = Vfl \cdot \{(\rho + dr \, / \, 2)^2 + lr^2\}^{1/2} \, / \, \{\rho^2 + (lf + lr)^2\}^{1/2}$$

$$V'fr = Vfr \cdot \{(\rho + dr \, / \, 2)^2 + lr^2\}^{1/2} \, / \, \{(\rho + dr)^2 + (lf + lr)^2\}^{1/2}$$

$$V'rl = Vrl \cdot \{(\rho + dr \, / \, 2)^2 + lr^2\}^{1/2} \, / \, \rho$$

$$V'rr = Vrr \cdot \{(\rho + dr \, / \, 2)^2 + lr^2\}^{1/2} \, / \, (\rho + dr)$$

The use of these relational expressions allows each of the wheel speeds to be corrected with use of only the wheel speed and the vehicle specifications confirmed in advance, without use of the sensor value such as the steering angle and the yaw rate. The vehicle body speed V' is calculated based on this corrected wheel speed.

In the above-described expressions, the corrected wheel speeds V'fl, V'fr, V'rl, V'rr are each calculated as the speed at the center of gravity of the vehicle, but do not necessarily have to be calculated as the speed at the center of gravity and may be calculated in a different manner as long as they are calculated as the speed at an arbitrary point located at an equal relative distance from each of the wheels. This is because an important factor is not an absolute speed but a difference (a ratio) in speed between the wheel that is slipping and the wheel that is not slipping.

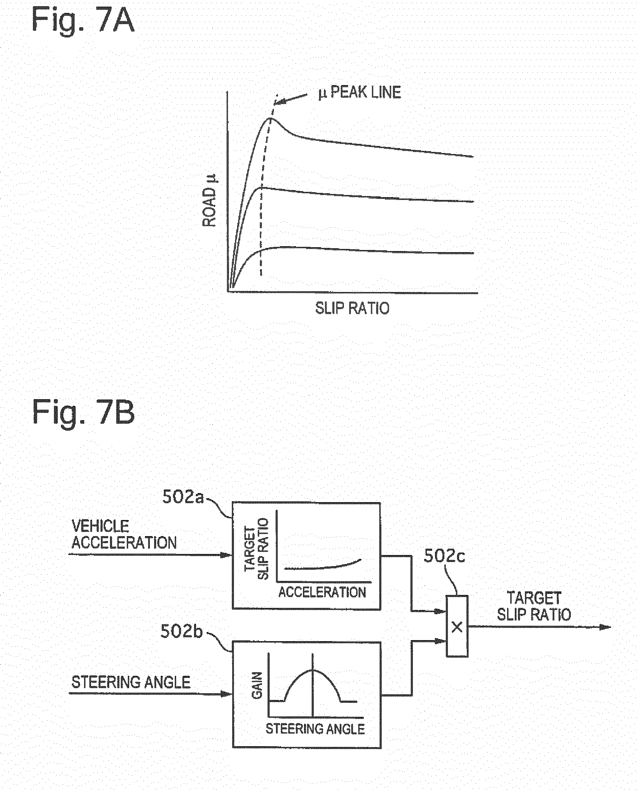

Returning to Fig. 3, a target slip ratio calculation unit 502 calculates a target slip ratio based on the steering angle and vehicle acceleration information. The vehicle acceleration information may be acquired from a longitudinal acceleration sensor, or may be calculated from a differential of the wheel speed or the vehicle speed. Fig. 7B is a control block diagram illustrating processing for calculating the target slip ratio according to the first embodiment. Fig. 7A is a characteristic diagram illustrating a frictional coefficient characteristic with respect to a slip ratio set for each road surface frictional coefficient (a road surface $\mu$). When the vehicle is running on a road where $\mu$ is high, an upper characteristic in Fig. 7A is selected. When the vehicle is running on a road where $\mu$ is low, a lower characteristic in Fig. 7A is selected. Then, the slip ratio is set within a range that does not exceed the slip ratio capable of acquiring a highest frictional coefficient (a maximum frictional coefficient) in each of the characteristics. This characteristic diagram can be prepared by setting a result measured in advance.

As illustrated in Fig. 7B, a straight running target slip ratio calculation unit 502a calculates a target slip ratio intended for a situation when the vehicle is running straight, based on the vehicle acceleration information. The vehicle acceleration is information corresponding to the road surface $\mu$. The straight running target slip ratio calculation unit 502a sets the target slip ratio capable of acquiring the maximum frictional coefficient according to the vehicle acceleration ($\approx$ the road surface $\mu$). A steering gain calculation unit 502b calculates a steering gain according to the steering angle. The steering gain calculation unit 502b sets a large steering gain (for example, 1) if the steering angle is small, i.e., the steering angle remains around a neutral position, and sets a smaller gain as the steering angle increases, i.e., the steering angle is being widened further away from the neutral position into a turning state (in such a state that the steering operation amount is large). A gain multiplication unit 502c multiplies the target slip ratio output from the straight running target slip ratio calculation unit 502a by the steering gain, thereby outputting the final target slip ratio.

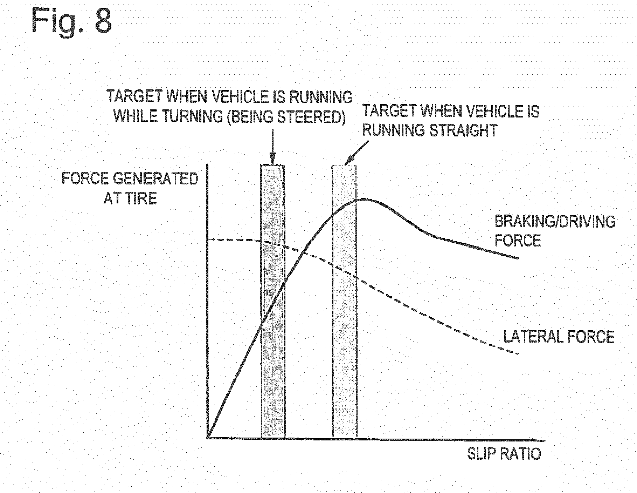

Fig. 8 is a characteristic diagram illustrating a difference between when the vehicle is turning and when the vehicle is running straight in terms of the target slip ratio set by the processing for setting the target slip ratio according to the first embodiment. When the vehicle is running straight, a lateral force is not required so much at each of the wheels. Therefore, the target slip ratio is set within a range that is located around the maximum slip ratio capable of acquiring the maximum frictional coefficient and does not exceed the maximum slip ratio. On the other hand, when the vehicle is running while turning, the lateral force is required at each of the wheels. Therefore, the target slip ratio is set to a relatively lower slip ratio than when the vehicle is running straight.

Returning to Fig. 3, a TCS flag determination unit 503 determines whether to perform the TCS control, and turns on a TCS control ongoing flag if determining to perform the TCS control, while turning off the TCS control ongoing flag if determining not to perform the TCS control.

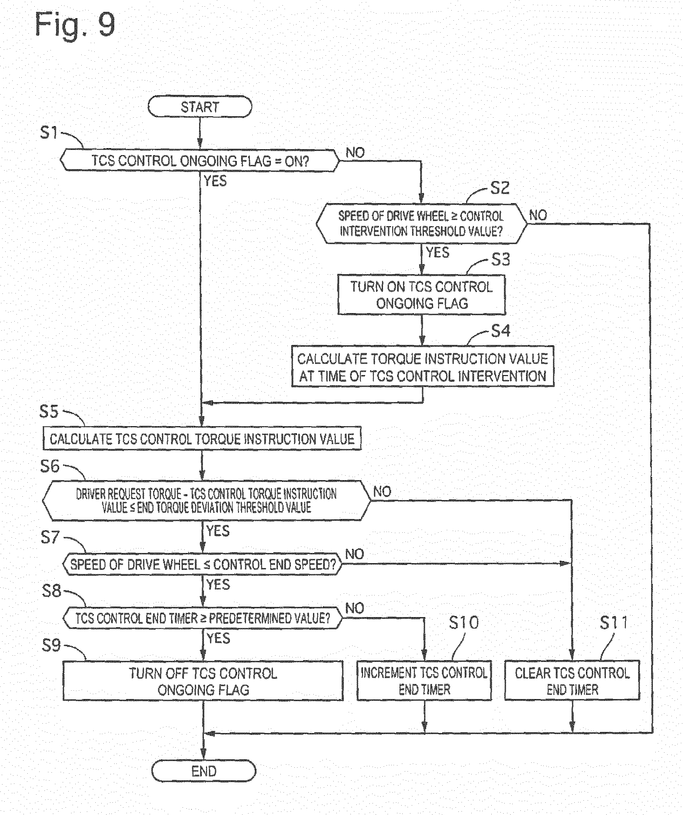

Fig. 9 is a flowchart illustrating processing for determining the TCS control ongoing flag according to the first embodiment.

In step S1, the brake controller determines whether the TCS control ongoing flag is ON. If the TCS control ongoing flag is ON, the processing proceeds to step S5. If the TCS control ongoing flag is OFF, the processing proceeds to step S2. In step S2, the brake controller determines whether the speed of the drive wheel is equal to or higher than a control intervention threshold value. If the drive wheel is equal to or higher than the control intervention threshold value, the processing proceeds to step S3. If not, the present control flow is ended. In step S3, the brake controller turns on the TCS control ongoing flag. In step S4, the brake controller calculates a torque instruction value at the time of TCS control intervention. More specifically, the brake controller calculates this value by subtracting a predetermined torque from the current torque instruction value. In step S5, the brake controller calculates the TCS control torque instruction value. More specifically, the brake controller calculates such a torque instruction value that a deviation between the speed of the drive wheel and the control intervention threshold value converge.

In step S6, the brake controller determines whether the deviation acquired by subtracting the TCS control torque instruction value from the driver request torque instruction value is equal to or smaller than an end torque deviation threshold value. If the deviation is equal to or smaller than the end torque deviation threshold value, the processing proceeds to step S7. If not, the processing proceeds to step S11. In other words, if the driver request torque instruction value largely deviates from the TCS control torque instruction value when the TCS control is ended and the torque value is changed to the driver request torque instruction value, a driving slip occurs again after the end of the control, making the driver feel uncomfortable. Therefore, the brake controller permits the end of the TCS control after the vehicle is brought into a state stably running without the driving slip or the like occurring again even when the TCS control is ended.

In step S7, the brake controller determines whether the speed of the drive wheel is equal to or lower than a control end speed. If the speed of the drive wheel is equal to or lower than the control end speed, the processing proceeds to step S8. If not, the processing proceeds to step S11. In step S8, the brake controller determines whether a timer value of a TCS control end timer is equal to or larger than a predetermined value. If the timer value is equal to or larger than the predetermined value, the processing proceeds to step S9. If not, the processing proceeds to step S10. In step S9, the brake controller turns off the TCS control ongoing flag. In step S10, the brake controller increments the TCS control end timer. In step S11, the brake controller clears the TCS control end timer. In other words, the TCS control end timer functions to end the TCS control after the predetermined time has elapsed after the end of the TCS control is determined to be approaching in step S6 or S7. Therefore, if the end of the TCS control is not approaching, the brake controller clears the TCS control end timer, and continues the TCS control.

Returning Fig. 3, a target wheel speed calculation unit 504 calculates a target wheel speed from the current corrected wheel speed and the target slip ratio. More specifically, the target wheel speed calculation unit 504 adds to the vehicle body speed a value acquired by multiplying the vehicle body speed by the target slip ratio, thereby setting the target wheel speed. A PI control unit 505 performs feedback control so as to reduce the deviation between the corrected wheel speed and the target wheel speed to a predetermined value or smaller, thereby calculating the TCS torque instruction value.

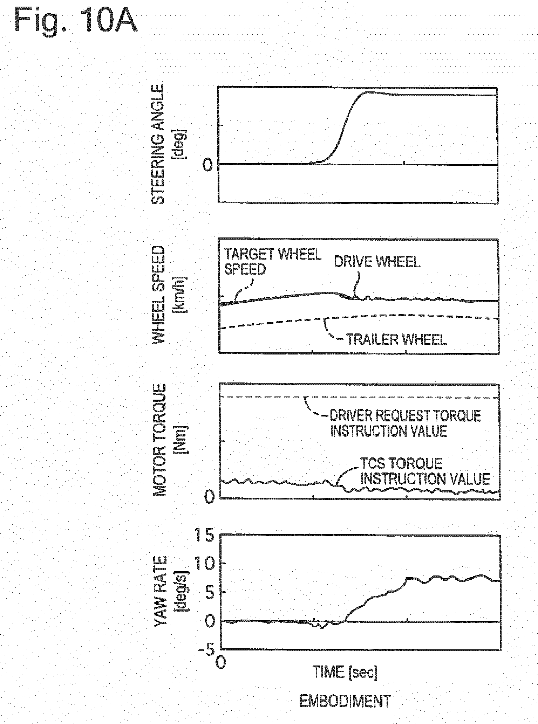

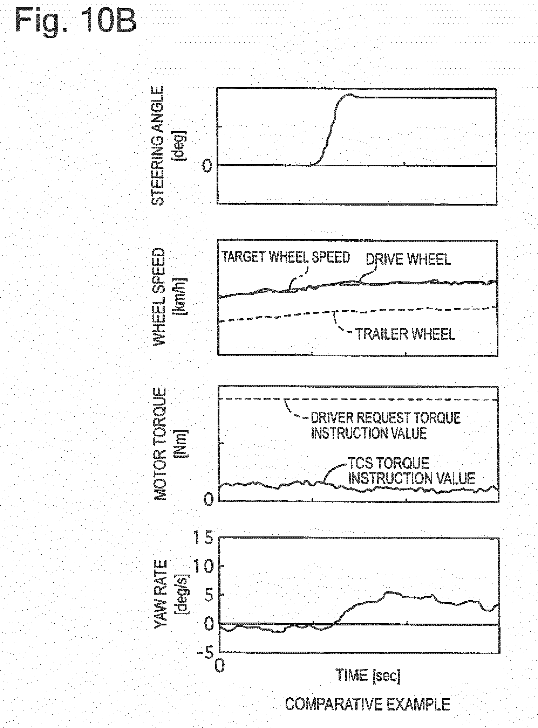

Next, a function based on the above-described control processing will be described. Figs. 10 are each a timing chart when the driver performs the steering operation while the TCS control according to the first embodiment is in operation. Fig. 10A illustrates a timing chart according to the first embodiment, and Fig. 10B illustrates, as a comparative example, a timing chart when the control according to the turning state is not performed. A lower value according to the TCS torque instruction value than the driver request torque instruction value is output for the motor torque because the TCS control is in operation when the vehicle is running straight,. Therefore, the target slip ratio is set to a large value, also leading to a large deviation between the wheel speed of the drive wheel and the wheel speed of the trailer wheel. The present embodiment and the comparative example are not different from each other in terms of that. Next, when the driver performs the steering operation, the target slip ratio is limited according to the steering angle in the first embodiment. This imitation leads to a reduction in the deviation between the wheel speed of the drive wheel and the wheel speed of the trailer wheel. Along therewith, the lateral force can be secured at the drive wheel, so that the yaw rate is solidly raised. On the other hand, the comparison example does not especially limit the target slip ratio, whereby the deviation between the wheel speed of the drive wheel and the wheel speed of the trailer wheel is almost the same as the deviation when the vehicle is running straight. In this case, the lateral force cannot be secured at the drive wheel, so that the yaw rate is not sufficiently raised.

In other words, limiting the target slip ratio according to the turn, like the first embodiment, can steadily secure the yaw rate according to the driver's intention to steer the vehicle.

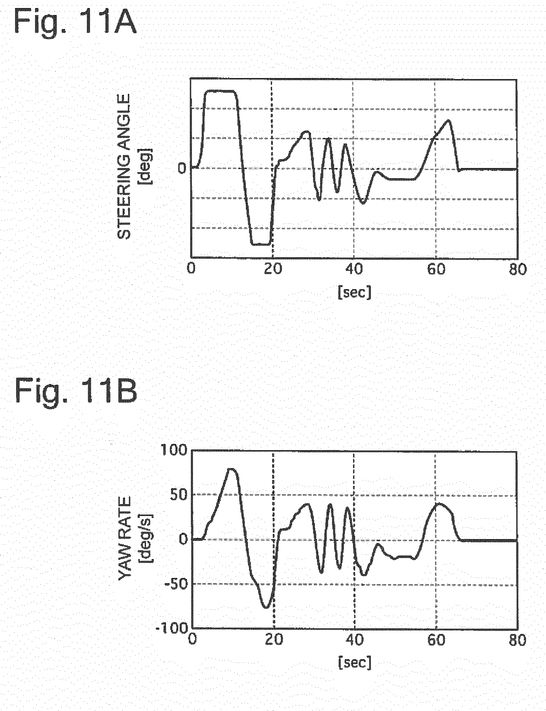

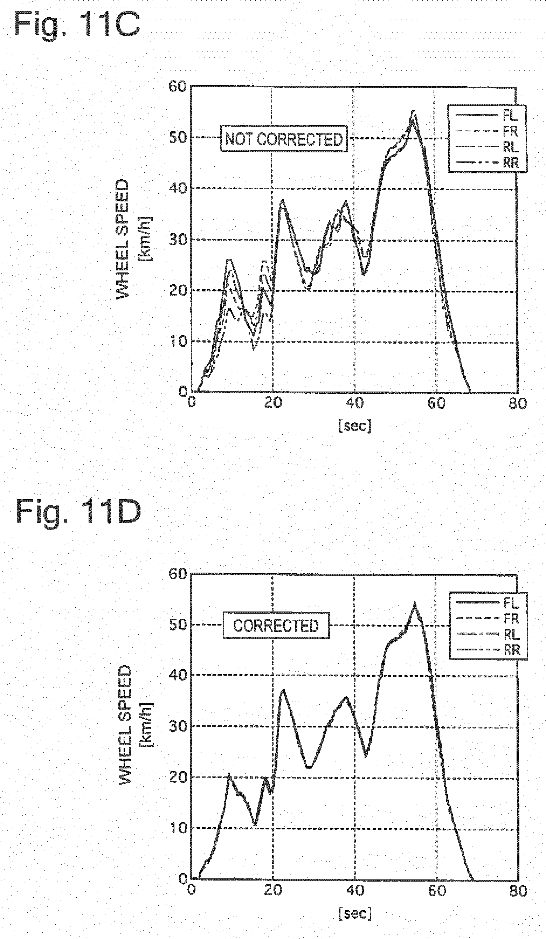

Figs. 11 are each a timing chart illustrating an effect of the processing for correcting the wheel speed according to the first embodiment. Fig. 11A illustrates a change in the steering angle over time. Fig. 11B illustrates a change in the yaw rate. Fig. 11C illustrates each of the wheel speeds when the wheel speed is not corrected. Fig. 11D illustrates the corrected wheel speed. When the driver steers the steering leftward and rightward as illustrated in Fig. 11A, a value varying according to the distance from the center of the turn is output as the wheel speed of each of the wheels according thereto. This is a value generated due to the vehicle specifications such as the track width and the wheelbase even when each of the wheels is appropriately running without excessively slipping. This tendency grows into a deviation that increases as the steering angle increases. On the other hand, it can be confirmed that correcting the wheel speed like the first embodiment to correct the wheel speed as, for example, the wheel speed based on the point of the center of the gravity of the vehicle allows all the wheel speeds to exhibit generally the same value. In other words, performing the TCS control or the like based on the corrected wheel speed can avoid such false detection that the deviation generated along with the turn is incorrectly interpreted as the slip state.

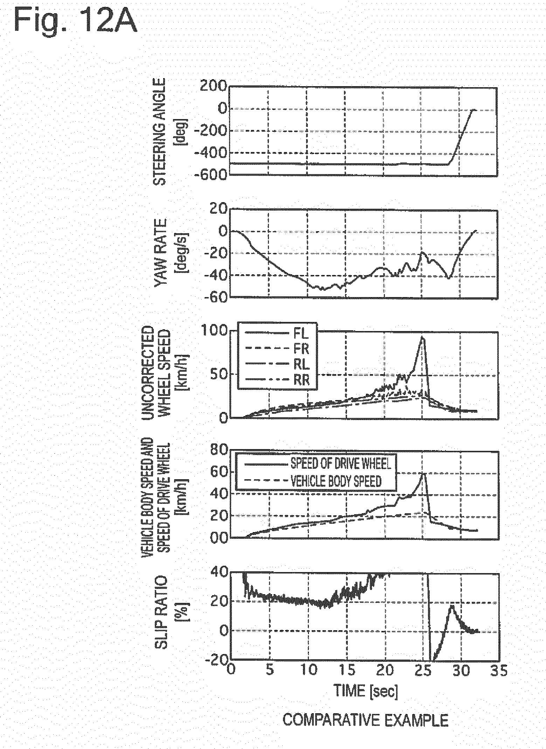

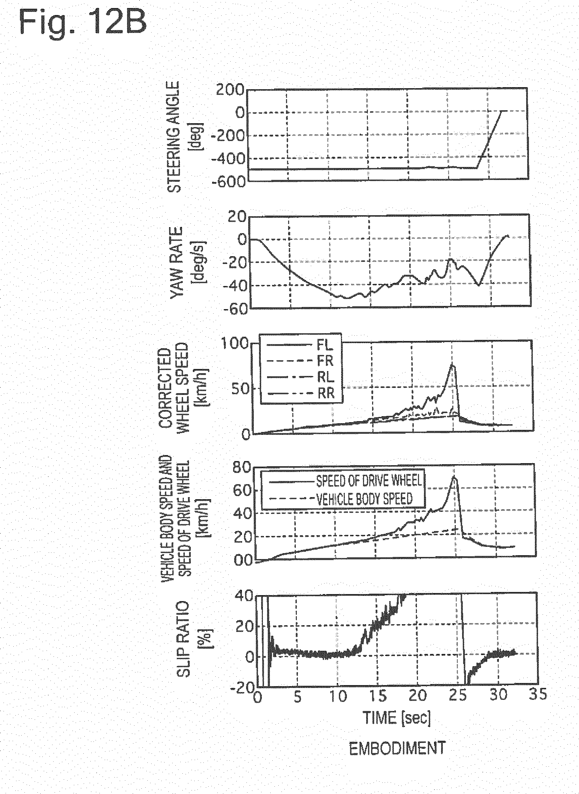

Figs. 12 are each a timing chart when a slip occurs at the drive wheel when the vehicle is running while turning, and the TCS control is activated. Fig. 12A illustrates a timing chart when the TCS control is performed without the wheel speed corrected, and Fig. 12B illustrates a timing chart when the TCS control is performed with use of the corrected wheel speed according to the first embodiment. In the case of the comparative example, the wheel speed varies at each of the wheels when the vehicle is turning. If a driving slip occurs at the front left wheel in this state, the TCS control intervenes despite the fact that the deviation does not occur so much actually in view of the relationship between the average value of the wheel speeds of the drive wheels and the vehicle body speed. Therefore, as illustrated around time t25 to time t30, an overshoot likely occurs when the slip ratio recovers again after temporarily largely reducing. On the other hand, as illustrated in Fig. 12B, in the case of the first embodiment, the wheel speed little varies at each of the wheels even when the vehicle is turning, due to the use of the corrected wheel speed. If a driving slip occurs at the front left wheel in this state, the TCS control does not intervene at an early timing because including no wheel speed component generated along with the turn. Further, the slip ratio can also smoothly recover to around approximately zero after the TCS control intervenes.

In the above-described manner, the first embodiment can bring about the following advantageous effects.

(1) The vehicle control apparatus includes the wheel speed sensor 9 (a wheel speed calculation unit) configured to calculate the wheel speed of each of the wheels, the wheel speed correction unit 501 (a correction unit) configured to calculate the corrected wheel speed, which is acquired by correcting the wheel speed based on the vehicle specifications indicating the position of each of the wheels, the brake controller 50 (a vehicle body speed calculation unit) configured to calculate the vehicle body speed based on the calculated corrected wheel speed, and the TCS control (a slip control unit) configured to control the slip state of each of the wheels according to the states of the corrected wheel speed and the vehicle body speed. Therefore, the slip state can be controlled based on the corrected wheel speed acquired by correcting in advance the influence due to the vehicle specifications, which can prevent the control from intervening at an early timing, thereby ensuring the drivability.

(2) The vehicle control apparatus further includes the steering angle sensor 110b (a steering operation amount calculation unit) configured to calculate the steering angle (the steering operation amount), and the yaw rate sensor 110a (a yaw rate calculation unit) configured to calculate the yaw rate of the vehicle. The vehicle speed correction unit 501 calculates the corrected wheel speed based on the steering angle and the yaw rate. More specifically, the vehicle control apparatus calculates the vehicle sideslip angle $\beta$ and corrects the wheel speed based thereon, and therefore can correct the wheel speed highly accurately.

(3) The vehicle control apparatus includes the steering sensor 110b configured to calculate the steering angle, and the TCS control controls the slip state of each of the wheels in such a manner that the slip ratio reduces as the calculated steering angle increases. Therefore, the lateral force can be secured at the tire when the vehicle is turning, which can achieve a stable turning state.

(4) The wheel speed correction unit 501 corrects the wheel speed based on the point of the center of gravity of the vehicle. Therefore, a highly accurate wheel speed can be acquired as the corrected wheel speed.

(5) The wheel speed correction unit 501 may be configured to correct the wheel speed based on the point on the extension of the rear axle. This configuration allows a highly accurate wheel speed to be acquired as the corrected wheel speed with use of only the wheel speed sensor without use of the yaw rate sensor and the like.

(6) Further, the wheel speed correction unit 501 may be configured to correct the wheel speed based on the point that is located on the extension of the rear axle and coincides with the center of the turn estimated from the wheel speed of each of the wheels. This configuration allows the wheel speed to be corrected from a geometric calculation, thereby allowing the vehicle control apparatus to be applied to the vehicle quickly without requiring adaptation or the like from an experiment.

(7) The vehicle control apparatus includes the brake controller 50 (a vehicle body speed calculation unit) configured to calculate the vehicle body speed of the vehicle, the wheel speed correction unit 501 (a control wheel speed calculation unit) configured to calculate the control wheel speed, which is acquired by removing the wheel speed change component generated along with the turn from the wheel speed of each of the wheels, and the slip control unit configured to control the slip state of each of the wheels according to the states of the control wheel speed and the vehicle body speed. Therefore, the slip state is controlled based on the control wheel speed acquired by correcting in advance the influence due to the vehicle specifications, which can prevent the control from intervening at an early timing, thereby ensuring the drivability.

The following aspect is not part of the first embodiment but provides a further example.

(8) The vehicle control apparatus includes the brake controller 50 (a vehicle body speed calculation unit) configured to calculate the vehicle body speed of the vehicle, the wheel speed sensor 9 (a wheel speed calculation unit) configured to calculate the wheel speed of each of the wheels, the wheel speed correction unit 501 (a control wheel speed calculation unit) configured to calculate the control wheel speed from the calculated wheel speed by calculating the wheel speed of each of the wheels as the speed at the predetermined position of the vehicle, and the slip control unit configured to control the slip state of each of the wheels according to the states of the control wheel speed and the vehicle body speed. Therefore, the control wheel speed is calculated as the speed at the predetermined position of the vehicle, which can eliminate in advance the influence due to the vehicle specifications, and ensure the drivability by preventing the control from intervening at an early timing.

Having described the present invention based on the embodiment, the present invention is not limited to the above-described embodiment and may be configured in another manner. For example, in the embodiment, the wheel speed is corrected based on the point of the center of gravity of the vehicle or the center of the turn, but the correction of the wheel speed is not limited thereto and the wheel speed may be corrected based on an arbitrary point. In other words, the corrected wheel speed of each of the wheels exhibits generally the same value unless a slip occurs, if the influence of the vehicle specifications can be removed. Performing the slip control based on the deviation from this value can avoid creation of a discomfort, such as the early intervention of the slip control and a reduction in the torque due to the intervention.

Further, the embodiment has been described referring to the control at the time of the driving slip, but the present control may be applied to the control at the time of braking as long as this control functions to control the slip amount based on the relationship between the wheel speed and the vehicle body speed.

Further, the embodiment has been described referring to the example in which the vehicle control apparatus is applied to the electric vehicle, but the applicability of the vehicle control apparatus is not limited to the electric vehicle and the vehicle control apparatus may be applied to a normal engine vehicle and a hybrid vehicle.

Further, the embodiment has been described referring to the example in which the vehicle body speed is calculated based on the wheel speed, but the method for acquiring the vehicle body speed is not limited to the method using the wheel speed and the vehicle body speed may be acquired with use of a method that estimates an absolute vehicle body speed with use of an acceleration sensor or the like, or a method that estimates the vehicle body speed based on GPS information.

Therefore, according to the above-described embodiments, the slip state is controlled based on the corrected wheel speed acquired by correcting in advance the influence due to the vehicle specifications indicating the position of each of the wheels, which can prevent the control from intervening at an early timing, thereby ensuring the drivability.

Having described merely several embodiments of the present invention, it is apparent to those skilled in the art that the embodiments described as examples can be modified or improved in various manners without substantially departing from the novel teachings and advantages of the present invention. Therefore, such embodiments modified or improved in various manners are intended to be also contained in the technical scope of the present invention.

REFERENCE SIGNS LIST

| | |
|---|---|
| 1 | electric motor |
| 3 | differential gear |
| 3a | speed reduction mechanism |
| 4 | drive shaft |
| 5 | hydraulic unit |
| 9 | wheel speed sensor |

| | |
|---|---|
| 10 | inverter |
| 50 | brake controller |
| 60 | battery controller |
| 100 | motor controller |
| 110 | vehicle controller |
| 110a | yaw rate sensor |
| 110b | steering angle sensor |
| W/C | wheel cylinder |

**Claims**

1. A vehicle control apparatus comprising:

    a wheel speed calculation unit (9) configured to calculate a wheel speed of wheels (FR, FL, RL, RR);
    a correction unit (501) configured to calculate a corrected wheel speed, which is acquired by correcting the wheel speed based on vehicle specifications indicating a position of each of the wheels (FR, FL, RL, RR);
    a vehicle body speed calculation unit (50) configured to calculate a vehicle body speed based on the calculated corrected wheel speed;
    a slip control unit configured to control a slip state of the wheels (FR, FL, RL, RR) according to states of the corrected wheel speed and the vehicle body speed;
    a steering operation amount calculation unit (110b) configured to calculate a steering operation amount; and
    a yaw rate calculation unit (110a) configured to calculate a yaw rate of a vehicle,
    **characterized in that** the slip control unit controls the slip state of each of the wheels (FR, FL, RL, RR) in such a manner that the target slip ratio reduces as the calculated steering operation amount increases, and
    the correction unit (501) calculates the corrected wheel speed based on the steering operation amount and the yaw rate.

2. The vehicle control apparatus according to claim 1, wherein the correction unit (501) corrects the wheel speed based on a point of a center of gravity of the vehicle.

3. The vehicle control apparatus according to claim 1, wherein the correction unit (501) corrects the wheel speed based on a point on an extension of a rear axle.

4. The vehicle control apparatus according to claim 3, wherein the correction unit (501) corrects the wheel speed based on a center of a turn that is estimated from the wheel speed of each of the wheels (FR, FL, RL, RR).

5. The vehicle control apparatus according to claim 1, wherein the correction unit (501) is configured to remove a wheel speed change component generated along with a turn from a wheel speed of each of the wheels (FR, FL, RL, RR) to calculate the corrected wheel speed; and
    a slip control unit configured to control a slip state of the wheels (FR, FL, RL, RR) according to states of the control wheel speed and the vehicle body speed.

**Patentansprüche**

1. Fahrzeugsteuerungsgerät, das umfasst:

    eine Raddrehzahl-Berechnungseinheit (9), die konfiguriert ist, um eine Raddrehzahl von Rädern (FR, FL, RL, RR) zu berechnen;
    eine Korrektureinheit (501), die konfiguriert ist, um eine korrigierte Raddrehzahl zu berechnen, die durch Korrigieren der Raddrehzahl auf der Basis von Fahrzeugspezifikationen gewonnen wird, die eine Position von jedem der Räder (FR, FL, RL, RR) anzeigen,
    eine Fahrzeugkarosserie-Geschwindigkeitsberechnungseinheit (50), die konfiguriert ist, um eine Fahrzeugkarosserie-Geschwindigkeit auf der Basis der berechneten korrigierten Raddrehzahl zu berechnen;
    eine Schlupfregeleinheit, die konfiguriert ist, um einen Schlupfzustand der Räder (FR, FL, RL, RR) entsprechend den Zuständen der korrigierten Raddrehzahl und der Fahrzeugkarosserie-Geschwindigkeit zu regeln;
    eine Lenkvorgangumfangs-Berechnungseinheit (110b), die konfiguriert ist, um einen Lenkvorgangumfang zu berechnen; und

eine Gierratenberechnungseinheit (110a), die konfiguriert ist, um eine Gierrate eines Fahrzeugs zu berechnen, **dadurch gekennzeichnet, dass** die Schlupfregeleinheit den Schlupfzustand von jedem der Räder (FR, FL, RL, RR) in einer solchen Weise steuert, dass das Soll-Schlupfverhältnis abnimmt, wenn der berechnete Lenkvorgangumfang zunimmt, und

die Korrektureinheit (501) die korrigierte Raddrehzahl auf der Basis des Lenkvorgangumfangs und der Gierrate berechnet.

2. Fahrzeugsteuerungsgerät nach Anspruch 1, wobei die Korrektureinheit (501) die Raddrehzahl auf der Basis eines Punktes von einem Schwerpunkt des Fahrzeugs korrigiert.

3. Fahrzeugsteuerungsgerät nach Anspruch 1, wobei die Korrektureinheit (501) die Raddrehzahl auf der Basis eines Punktes auf einer Verlängerung einer Hinterachse korrigiert.

4. Fahrzeugsteuerungsgerät nach Anspruch 3, wobei die Korrektureinheit (501) die Raddrehzahl auf der Basis eines Kurvenmittelpunktes korrigiert, der anhand der Raddrehzahl von jedem der Räder (FR, FL, RL, RR) geschätzt wird.

5. Fahrzeugsteuerungsgerät nach Anspruch 1, wobei die Korrektureinheit (501) konfiguriert ist, um eine zusammen mit einer Kurve erzeugte Raddrehzahl-Änderungskomponente anhand einer Raddrehzahl von jedem der Räder (FR, FL, RL, RR) zu entfernen, um die korrigierte Raddrehzahl zu berechnen; und

eine Schlupfregeleinheit konfiguriert ist, um einen Schlupfzustand der Räder (FR, FL, RL, RR) entsprechend Zuständen der Steuerungsraddrehzahl und der Fahrzeugkarosserie-Geschwindigkeit zu regeln.

## Revendications

1. Appareil de commande de véhicule comprenant :

une unité de calcul de vitesse de rotation de roue (9) configurée pour calculer la vitesse de rotation des roues (FR, FL, RL, RR),

une unité de correction (501) configurée pour calculer une vitesse de rotation de roue corrigée qui est acquise en corrigeant la vitesse de rotation de roue sur la base des spécifications de véhicules indiquant la position de chacune des roues (FR, FL, RL, RR),

une unité de calcul de vitesse de carrosserie de véhicule (50) configurée pour calculer la vitesse de la carrosserie du véhicule sur la base de la vitesse de rotation de roue corrigée calculée,

une unité de commande de patinage configurée pour commander l'état de patinage des roues (FR, FL, RL, RR) en fonction des états de la vitesse de rotation de roue corrigée et de la vitesse de la carrosserie du véhicule,

une unité de calcul d'amplitude de manœuvre de direction (110b) configurée pour calculer l'amplitude de manœuvre de direction, et

une unité de calcul de taux de lacet (110a) configurée pour calculer le taux de lacet d'un véhicule,

**caractérisé en ce que** l'unité de commande de patinage commande l'état de patinage de chacune des roues (FR, FL, RL, RR) de manière à ce que le taux de patinage cible se réduise à mesure qu'augmente l'amplitude de manœuvre de direction calculée, et

l'unité de correction (501) calcule la vitesse de rotation de roue corrigée sur la base de l'amplitude de manœuvre de direction et du taux de lacet.

2. Appareil de commande de véhicule selon la revendication 1, dans lequel l'unité de correction (501) corrige la vitesse de rotation de roue sur la base du point du centre de gravité du véhicule.

3. Appareil de commande de véhicule selon la revendication 1, dans lequel l'unité de correction (501) corrige la vitesse de rotation de roue sur la base d'un point situé sur une extension de l'essieu arrière.

4. Appareil de commande de véhicule selon la revendication 3, dans lequel l'unité de correction (501) corrige la vitesse de rotation de roue sur la base du centre d'un virage qui est estimé à partir de la vitesse de rotation de roue de chacune des roues (FR, FL, RL, RR).

5. Appareil de commande de véhicule selon la revendication 1, dans lequel l'unité de correction (501) est configurée pour retirer une composante de modification de vitesse de rotation de roue générée pendant un virage à partir de la vitesse de rotation de roue de chacune des roues (FR, FL, RL, RR) afin de calculer la vitesse de rotation de roue corrigée, et

une unité de contrôle de patinage configurée pour contrôler l'état de patinage des roues (FR, FL, RL, RR) en fonction des états de la vitesse de rotation de roue et de la vitesse de la carrosserie de véhicule.

# Fig. 1

# Fig. 2

# Fig. 3

DRIVER REQUEST TORQUE

WHEEL SPEED

YAW RATE

501 — WHEEL SPEED CORRECTION UNIT

503 — TCS FLAG DETERMINATION UNIT

PI CONTROL UNIT

TCS TORQUE INSTRUCTION VALUE

505

STEERING ANGLE

502 — TARGET SLIP RATIO CALCULATION UNIT

VEHICLE ACCELERATION

TARGET WHEEL SPEED CALCULATION UNIT

504

EP 3 147 166 B1

# Fig. 4

# Fig. 5A

# Fig. 5B

# Fig. 6

Fig. 7A

μ PEAK LINE

ROAD μ

SLIP RATIO

Fig. 7B

502a

VEHICLE
ACCELERATION

TARGET SLIP RATIO

ACCELERATION

502c

TARGET
SLIP RATIO

502b

STEERING ANGLE

GAIN

STEERING ANGLE

×

# Fig. 8

# Fig. 9

START

S1 — TCS CONTROL ONGOING FLAG = ON? — NO

YES

S2 — SPEED OF DRIVE WHEEL ≥ CONTROL INTERVENTION THRESHOLD VALUE? — NO

YES

S3 — TURN ON TCS CONTROL ONGOING FLAG

S4 — CALCULATE TORQUE INSTRUCTION VALUE AT TIME OF TCS CONTROL INTERVENTION

S5 — CALCULATE TCS CONTROL TORQUE INSTRUCTION VALUE

S6 — DRIVER REQUEST TORQUE - TCS CONTROL TORQUE INSTRUCTION VALUE ≤ END TORQUE DEVIATION THRESHOLD VALUE — NO

YES

S7 — SPEED OF DRIVE WHEEL ≤ CONTROL END SPEED? — NO

YES

S8 — TCS CONTROL END TIMER ≥ PREDETERMINED VALUE? — NO

YES

S9 — TURN OFF TCS CONTROL ONGOING FLAG

S10 — INCREMENT TCS CONTROL END TIMER

S11 — CLEAR TCS CONTROL END TIMER

END

EP 3 147 166 B1

# Fig. 10A

STEERING ANGLE [deg]

WHEEL SPEED [km/h]

TARGET WHEEL SPEED  DRIVE WHEEL

TRAILER WHEEL

MOTOR TORQUE [Nm]

DRIVER REQUEST TORQUE INSTRUCTION VALUE

TCS TORQUE INSTRUCTION VALUE

YAW RATE [deg/s]

TIME [sec]

EMBODIMENT

## Fig. 10B

COMPARATIVE EXAMPLE

Fig. 11A

Fig. 11B

# Fig. 11C

# Fig. 11D

# Fig. 12A

COMPARATIVE EXAMPLE

25

# Fig. 12B

TIME [sec]

EMBODIMENT

**EP 3 147 166 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0885438 B
- US 6015192 A